# EUROPÄISCHE PATENTSCHRIFT

(11) **EP 1 106 823 B1**
(45) Veröffentlichungstag und Bekanntmachung des Hinweises auf die Patenterteilung: **04.10.2001**
(21) Anmeldenummer: 99124138.1
(22) Anmeldetag: 02.12.1999
(51) Int. Cl.: F02N 11/04, F02N 17/08, H02K 7/10

(54) **Antriebsvorrichtung mit einer Verbrennungsmaschine und einer elektrischen Maschine, insbesondere einem Starter-Generator**
Starter device with an internal combustion engine and an electrical machine, in particular a starter-generator
Dispositif de démarrage muni d'un moteur à combustion interne et d'une machine électrique, en particulier un démarreur-générateur

(43) Veröffentlichungstag der Anmeldung: 13.06.2001
(73) Patentinhaber: SIEMENS AKTIENGESELLSCHAFT, 80333 München (DE)
(72) Erfinder: Dehrmann, Uwe, 97076 Würzburg (DE); Schäfer, Heinz, Dr., 97230 Estenfeld (DE); Wähner, Ludwig, 97234 Reichenberg (DE)

(56) Entgegenhaltungen:
- WO-A-95/01884
- DE-A- 4 406 481
- US-A- 5 458 098

## Beschreibung

Die Erfindung bezieht sich auf eine Antriebsvorrichtung mit einer Verbrennungsmaschine und einer elektrischen Maschine, insbesondere einem Starter-Generator gemäß Patentanspruch 1; eine Antriebsvorrichtung mit dem ersten Teilmerkmal des Patentanspruchs 1 ist durch die EP 0 706 462 B1 bekannt.

Bei Antriebsvorrichtungen der vorgenannten Art ersetzt bei Anwendung in einem Kraftfahrzeug der Starter-Generator die herkömmliche Lichtmaschine und den herkömmlichen Anlasser. Insbesondere beim Kaltstart der Verbrennungsmaschine müssen von dem Starter-Generator hohe Startmomente zur Verfügung gestellt werden, die eine hohe Batteriebelastung bedingen; z.B. muß beim Kaltstart eines Otto-Motors mit zwei Liter Hubraum ein Startmoment von etwa 200 Nm aufgebracht werden, was auf der Basis eines 42-Volt Bordnetzes einen Startstrom von ca. 560 Ampere bedingt. Derartige hohe Batterieströme erfordern große und aufwendige Batterien und entsprechend dimensionierte Starter-Generatoren.

Gemäß Aufgabe vorliegender Erfindung soll mit einfachen konstruktiven und steuerungstechnischen Mitteln trotz Gewährleistung der erforderlichen Kaltstart-Leistung der Aufwand und insbesondere das Gewicht der dazu erforderlichen elektrischen Maschinen- und elektrischen Speicherleistung reduziert werden. Die Lösung der vorgenannten Aufgabe gelingt erfindungsgemäß durch eine Antriebsvorrichtung gemäß Patentanspruch 1; vorteilhafte Ausgestaltungen der Erfindung sind jeweils Gegenstand der Unteransprüche.

Da das an sich vorhandene, üblicherweise betriebsmäßig, z.B. gemäß der DE 44 06 481 C2, lediglich als Drehschwingungstilger eingesetzte und in einer Ausführung als Schraubenfeder aus "Die Bibliothek der Technik", verlag moderne industrie, Bd. 138, 1997, Seiten 40-51 bekannte elastische Torsionsdämpferelement bei der erfindungsgemäßen Antriebsvorrichtung während des Startvorganges der Verbrennungsmaschine bei noch stillstehender Kurbelwelle zunächst als potentieller Energiespeicher benutzt wird, dessen Energie anschließend den Startvorgang der Verbrennungsmaschine impulsartig unterstützt, kann die maximal benötigte Leistung von Batterie und Starter-Generator in vorteilhafter Weise reduziert werden. Die impulsartige Starthilfe durch das zuvor in Gegendrehrichtung vorgespannte elastische Element wird in vorteilhafter Weise dadurch unterstützt, daß die Rotorschwungmasse in die Sekundärseite, d.h. in die Abtriebsseite, verlegt ist und somit beim Startvorgang nicht mitbeschleunigt werden muß.

Zu Beginn des Kaltstarts wird mit der elektrischen Leistung des Starter-Generators die Sekundärmasse des Dämpfersystems des elastischen Elementes gegen die noch, insbesondere aufgrund ihrer Ruhereibung, feststehende Kurbelwelle und damit die Primärseite des Dämpfersystems entgegen der Drehrichtung der Verbrennungsmaschine vorgespannt; bei einer "weichen" Auslegung, d.h. bei geringen Verdrehstreifigkeiten des elastischen Elementes, ergibt sich vorteilhaft ein elastisches Weitwinkel-Element mit entsprechend großem Verdrehwinkel.

Die Erfindung sowie weitere vorteilhafte Ausgestaltungen der Erfindung gemäß Merkmalen der Unteransprüche werden im folgenden anhand zweier Ausführungsbeispiele in der Zeichnung näher erläutert. Darin zeigen:

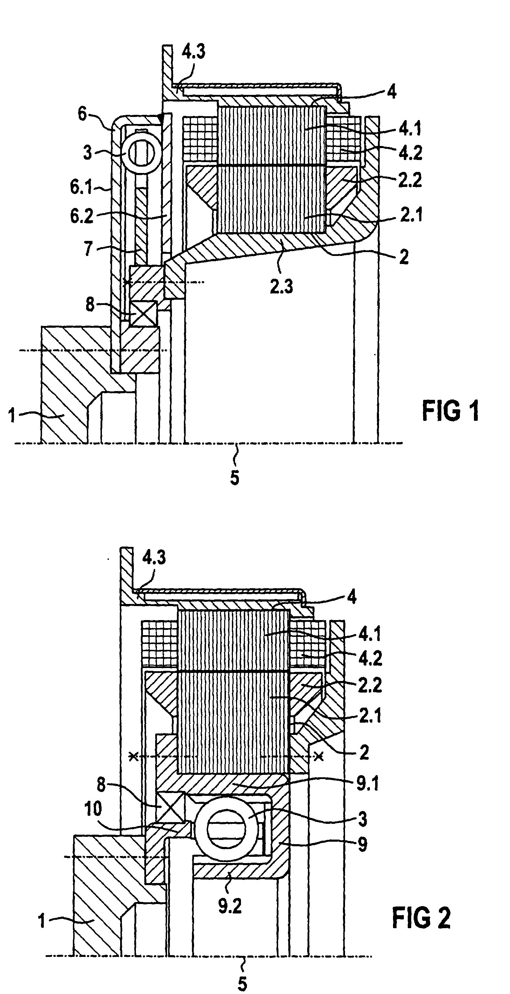

- FIG 1: einen Axialschnitt durch eine erfindungsgemäß aufgebaute und anzusteuernde Antriebsvorrichtung mit einem zwischen dem Primärteil und dem Sekundärteil eines Zweimassenschwungrades primärseitig angebundenen, axial vor der einen Stirnseite des Rotors bzw. Stators der elektrischen Maschine angeordneten elastischen Element;
- FIG 2: einen Axialschnitt durch eine erfindungsgemäß aufgebaute und anzusteuernde Antriebsvorrichtung mit einem zwischen einem Abdeckblech sekundärseitig an dieses angebundenen, radial unterhalb des Rotorpaketes bzw. Statorpaketes der elektrischen Maschine angeordneten elastischen Element.

FIG 1,2 zeigen jeweils im Ausschnitt eines Axialbereichs zwei Ausführungsbeispiele einer Antriebsvorrichtung mit einer primärseitigen Verbrennungsmaschine, von der die Kurbelwelle 1 dargestellt ist, und einem damit über ein elastisches Element 3 gekoppelten Rotors 2 eines in Achsrichtung 5 nachgeordneten sekundärseitigen Starter-Generators.

Der Starter-Generator ist jeweils ausgebildet als elektrische Innenläufer-Maschine, insbesondere als Asynchronmaschine mit Käfigläufer, mit einem von einem Rotorhalter 2.3 aufgenommenen Rotorpaket 2.1 mit stirnseitigen Kurzschlußringen 2.2 eines nicht dargestellten Rotorkäfigs, und mit einem von einem Statorhalter 4.3 augenommenen Stator 4 mit einem Statorpaket 4.1 mit Wickelköpfen 4.2 einer nicht dargestellten Statorwicklung.

FIG 1 zeigt in einer ersten erfindungsgemäßen Ausgestaltung eine Antriebsvorrichtung mit einem über ein Zweimassen-Schwungrad 6;7 primärseitig an die sekundärseitig an die Kurbelwelle 1 bzw. den Rotor 2 angebundenen, axial vor der elektrischen Maschine angeordneten elastischen Element 3. Der Primärteil 6 des Zweimassen-Schwungrades übergreift das elastische Element 3 mit zwei radial zu der Achse 5 vor dem Stator 4 und Rotor 2 verlaufenden Armen 6.1;6.2; das in dem axialen Zwischenraum zwischen den Armen 6.1;6.2 des Primärteils 6 des Zweimassen-Schwungrades 6;7 angeordnete und an diese primärseitig angebundene elastische Element 3 ist sekundärseitig über den zwischen den Armen 6.1;6.2 ebenfalls radial verlaufenden Sekundärteil 7 des Zweimassen-Schwungrades 6;7 an den Rotor 2 angebunden; zwischen dem Primärteil 6 und dem Sekundärteil 7 des Zweimassen-Schwungrades 6;7 ist zur einfachen gegenseitigen Abstützung eine Drehschwenklagerung 8 vorgesehen.

FIG 2 zeigt in einer zweiten erfindungsgemäßen Ausgestaltung eine Antriebsvorrichtung mit einem sekundärseitig über ein Abdeckblech 9 an den Rotor 2 bzw. primärseitig über eine Nabe 10 an die Kurbelwelle 1 angebundenes elastisches Element 3. Das Abdeckblech 9 übergreift das elastische Element 3 bügelartig mit zwei parallel zu der Achse 5 radial unterhalb des Rotorpaketes 2.1 verlaufenden Bügelarmen 9.1;9.2. Das in dem radialen Zwischenraum zwischen den Bügelarmen 9.1;9.2 des Abdeckbleches 9 angeordnete und an diese sekundärseitig angebundene elastische Element 3 ist primärseitig über eine axial zwischen den Bügelarmen 9.1;9.2 verlaufende Nabe 10 an die Kurbelwelle 1 angebunden; zwischen dem Abdeckblech 9, insbesondere dessen unmittelbar mit dem Rotorpaket 2.1 verbundenem, radial äußeren Bügelarm 9.1 und der Nabe 10 ist zur einfachen gegenseitigen Abstützung eine Drehschwenklagerung 8 vorgesehen.

Beim Start, insbesondere Kaltstart, der Verbrennungsmaschine wird bei der erfindungsgemäßen Antriebsvorrichtung vor dem Zünden der Verbrennungsmaschine zunächst der Rotor 2 der Elektromaschine durch elektrischen Antrieb entgegen der anschließenden Betriebsdrehrichtung der Verbrennungsmaschine derart angetrieben, daß das, insbesondere als Torsionsdämpferelement ausgebildete, elastische Element 3 bei, insbesondere aufgrund seiner Ruhereibung, ruhender Kurbelwelle 1 vorgespannt wird; bei vorzugsweise vorgesehenem elastischen Weitwinkel-Element läßt sich für das Beispiel einer Verbrennungsmaschine mit 2 Liter Hubraum mit einer Beaufschlagung des Rotors 2 mit etwa 100 Nm ein Verdrehwinkel von ca. 30° erreichen. Wenn dieser Winkel erreicht bzw. wenn der Rotor 2 zum Stillstand gekommen ist, wird seine Antriebsdrehrichtung umgekehrt, die Verbrennungsmaschine gezündet und die Kurbelwelle 1 durch die Elektromaschine mit etwa 100 Nm elektrisch angetrieben.

Aufgrund der zusätzlichen impulsartigen Unterstützung des Kurbelwellenantriebes durch das vorgespannte elastische Element kann dabei das elektrische Startmoment bei entsprechender Minimierung der maximalen Batterie- und Elektromaschinenleistung gegenüber bekannten Antriebsvorrichtungen mit einer Verbrennungsmaschine und einer Elektromaschine, insbesondere einem Starter-Generator, wesentlich reduziert werden.

## Patentansprüche

1. Antriebsvorrichtung mit einer Verbrennungsmaschine und einer elektrischen Maschine, insbesondere einem Starter-Generator mit folgenden Merkmalen:
- Die Kurbelwelle (1) der Verbrennungsmaschine ist über zumindest ein elastisches Element (3), insbesondere ein zur Drehschwingungstilgung vorgesehenes Torsionsdämpferelement, mit dem Rotor (2) der elektrischen Maschine verbunden;
- vor dem Starten der Verbrennungsmaschine steht der Rotor (2) bei stillstehender Kurbelwelle (1) in elektrischer Antriebsverbindung entgegen der Betriebsdrehrichtung der Verbrennungsmaschine im Sinne einer elastischen Vorspannung des elastischen Elementes (3);
- zum Starten der Verbrennungsmaschine steht die Kurbelwelle (1) in Antriebsuntertsützung in ihrer Betriebsdrehrichtung durch das vorgespannte elastische Element (3).

2. Antriebsvorrichtung nach Anspruch 1 mit dem Merkmal:
- Zum Starten der Verbrennungsmaschine steht die Kurbelwelle (1) in ihrer Betriebsdrehrichtung in Antriebsverbindung mit dem vorgespannten elastischen Element (3) und der elektrischen Maschine.

3. Antriebsvorrichtung nach Anspruch 1 und/oder 2 mit dem Merkmal:
- Das elastische Element (3) ist als Weitwinkel-Torsionsdämpfer ausgebildet.

4. Antriebsvorrichtung nach zumindest einem der Ansprüche 1 bis 3 mit dem Merkmal:
- Das elastische Element (3) steht primärseitig in mittelbarer bzw. unmittelbarer Drehmitnahme mit der Kurbelwelle (1) und sekundärseitig in Drehmitnahme mit dem Rotor (2) der Elektromaschine.

5. Antriebsvorrichtung nach Anspruch 4 mit dem Merkmal:
- Das elastische Element (3) ist axial vor der elektrischen Maschine angeordnet und steht über einen Primärteil (6) eines Zweimassen-Schwungrades (6;7) in Drehmitnahme mit der Kurbelwelle (1) und mit einem Sekundärteil (7) des Zweimassen-Schwungrades in Drehmitnahme mit dem Rotor (2) der elektrischen Maschine.

6. Antriebsvorrichtung nach Anspruch 5 mit den Merkmalen:
- Der Primärteil (6) des Zweimassen-Schwungrades (6;7) umfaßt das elastische Element (3) mit axial beabstandeten, radial zu der Achse (5) verlaufenden Armen (6.1;6.2);
- das elastische Element (3) ist im axialen Zwischenraum zwischen den Bügelarmen (6.1;6.2) des Primärteils (6) des Zweimassen-Schwungrades (6;7) angeordnet und an dieses primärseitig angebunden; das elastische Element (3) ist mit dem, im wesentlichen radial zwischen den Bügelarmen (6.1;6.2) verlaufenden, Sekundärteil (7) des Zweimassen-Schwungrades (6;7) sekundärseitig an den Rotor (2) angebunden.

7. Antriebsvorrichtung nach Anspruch 5 und/oder 6 mit dem Merkmal:
- Zwischen dem Primärteil (6) und dem Sekundärteil (7) des Zweimassen-Schwungrades (6;7) ist eine Drehschwenklagerung (8) vorgesehen.

8. Antriebsvorrichtung nach Anspruch 4 mit den Merkmalen:
- Das elastische Element (3) ist radial unterhalb des Rotorpaketes (2.1) des Rotors (2) bzw. des Statorpaketes (4.1) des Stators (4) der elektrischen Maschine angeordnet und steht primärseitig mit der Kurbelwelle (1) bzw. sekundärseitig über ein Abdeckblech (9) in Drehmitnahme mit dem Rotor (2);
- das Abdeckblech (9) übergreift das elastische Element (3) bügelartig mit radial beabstandeten, parallel zu der Achse (5) verlaufenden Bügelarmen (9.1;9.2);
- das elastische Element (3) ist im radialen Zwischenraum zwischen den Bügelarmen (9.1;9.2) des Abdeckblechs (9) angeordnet und an diese sekundärseitig angebunden;
- das elastische Element (3) ist über eine axial verlaufende Nabe (3.1) an die Kurbelwelle (1) angebunden.

9. Antriebsvorrichtung nach Anspruch 8 mit dem Merkmal:
- Zwischen zumindest einem der Bügelarme (9.1;9.2) des Abdeckblechs (9) einerseits und der Nabe (10) andererseits ist eine Drehschwenklagerung (8) vorgesehen.

10. Antriebsvorrichtung nach zumindest einem der Ansprüche 1 bis 9 mit dem Merkmal:
- Als elektrische Maschine ist eine Asynchronmaschine, insbesondere in Käfigläufer-Bauart, vorgesehen.

## Claims

1. Drive device having an internal combustion engine and an electric machine, in particular a starter generator, having the following features:
- the crankshaft (1) of the internal combustion engine is connected to the rotor (2) of the electric machine by at least one elastic element (3), in particular a torsion damper element which is provided for torsional vibration damping;
- before the internal combustion engine starts, when the crankshaft (1) is stationary, the rotor (2) has an electrical drive connection counter to the operational direction of rotation of the internal combustion engine to the effect of elastically prestressing the elastic element (3);
- in order to start the internal combustion engine, the driving of the crankshaft (1) is supported, in its operational direction of rotation, by the prestressed elastic element (3).

2. Drive device according to Claim 1, having the feature:
- in order to start the internal combustion engine, the crankshaft (1) has a drive connection, in its operational direction of rotation, to the prestressed elastic element (3) and to the electric machine.

3. Drive device according to Claim 1 and/or 2, having the feature:
- the elastic element (3) is embodied as a wide-angle torsion damper.

4. Drive device according to at least one of Claims 1 to 3, having the feature:
- the elastic element (3) is driven in rotation, on the primary side, indirectly or directly by the crankshaft (1) and on the secondary side by the rotor (2) of the electric machine.

5. Drive device according to Claim 4 having the feature:
- the elastic element (3) is arranged axially upstream of the electric machine and is driven in rotation by the crankshaft (1) via a primary part (6) of a dual-mass flywheel (6; 7), and is driven in rotation by the rotor (2) of the electric machine by means of a secondary part (7) of the dual-mass flywheel.

6. Drive device according to Claim 5, having the features:
- the primary part (6) of the dual-mass flywheel (6; 7) comprises the elastic element (3) with axially spaced arms (6.1; 6.2) which extend radially with respect to the axle (5);
- the elastic element (3) is arranged in the axial intermediate space between the hoop arms (6.1; 6.2) of the primary part (6) of the dual-mass flywheel (6; 7) and connected thereto on the primary side;
the elastic element (3) is connected on the secondary side to the rotor (2) by means of the secondary part (7), extending essentially radially between the hoop arms (6.1; 6.2), of the dual-mass flywheel (6; 7).

7. Drive device according to Claim 5 and/or 6, having the feature:
- a pivoting rotary bearing (8) is provided between the primary part (6) and the secondary part (7) of the dual-mass flywheel (6; 7).

8. Drive device according to Claim 4, having the features:
- the elastic element (3) is arranged radially underneath the rotor packet (2.1) of the rotor (2) or of the stator packet (4.1) of the stator (4) of the electric machine and is driven in rotation on the primary side by the crankshaft (1) and/or on the secondary side by the rotor (2) via a cover plate (9);
- the cover plate (9) engages over the elastic element (3) in a hoop-like fashion with radially spaced hoop arms (9.1; 9.2) which extend parallel to the axle (5);
- the elastic element (3) is arranged in the radial intermediate space between the hoop arms (9.1; 9.2) of the cover plate (9) and is connected thereto on the secondary side;
- the elastic element (3) is connected to the crankshaft (1) via an axially extending hub (3.1).

9. Drive device according to Claim 8, having the feature:
- a pivoting rotary bearing (8) is provided between at least one of the hoop arms (9.1; 9.2) of the cover plate (9) on the one hand and the hub (10) on the other.

10. Drive device according to at least one of Claims 1 to 9, having the feature:
- an asynchronous machine, in particular of a squirrel cage rotor design, is provided as the electric machine.

## Revendications

1. Dispositif d'entraînement comportant un moteur à combustion interne et une machine tournante électrique, notamment un démarreur-dynamo, ayant les caractéristiques suivantes :
- le vilebrequin (1) du moteur à combustion interne est relié au rotor (2) de la machine tournante électrique par l'intermédiaire d'au moins un élément (3) élastique, notamment d'un élément amortisseur de torsion prévu pour amortir les vibrations de torsion ;
- avant le démarrage du moteur à combustion interne, le vilebrequin (1) étant immobile, le rotor (2) se trouve en liaison électrique d'entraînement à l'encontre du sens de rotation du moteur à combustion interne en fonctionnement, au sens d'une précontrainte élastique de l'élément (3) élastique ;
- pour le démarrage du moteur à combustion interne, le vilebrequin (1) se trouve, par l'élément (3) élastique précontraint, en assistance d'entraînement dans son sens de rotation en fonctionnement.

2. Dispositif d'entraînement suivant la revendication 1, ayant la caractéristique suivante :
- pour le démarrage du moteur à combustion interne, le vilebrequin (1) se trouve en liaison d'entraînement, dans son sens de rotation en fonctionnement avec l'élément (3) élastique précontraint et la machine tournante électrique.

3. Dispositif d'entraînement suivant la revendication 1 et/ou 2, ayant la caractéristique suivante :
- l'élément (3) élastique est réalisé sous forme d'amortisseur de torsion à grand angle.

4. Dispositif d'entraînement suivant au moins l'une des revendications 1 à 3, ayant la caractéristique suivante :
- l'élément (3) élastique se trouve du côté primaire en entraînement indirect ou direct en rotation avec le vilebrequin (1), et du côté secondaire en entraînement en rotation avec le rotor (2) de la machine tournante électrique.

5. Dispositif d'entraînement suivant la revendication 4, ayant la caractéristique suivante :
- l'élément (3) élastique est disposé axialement devant la machine tournante électrique et se trouve en entraînement en rotation avec le vilebrequin (1) par l'intermédiaire d'une partie (6) primaire d'un volant (6 ; 7) moteur à deux masses, et en entraînement en rotation avec le rotor (2) de la machine tournante électrique par une partie (7) secondaire du volant moteur à deux masses.

6. Dispositif d'entraînement suivant la revendication 5, ayant les caractéristiques suivantes :
- la partie (6) primaire du volant (6 ; 7) moteur à deux masses embrasse l'élément (3) élastique par des bras (6.1; 6.2) axialement distants, s'étendant radialement à l'axe (5) ;
- l'élément (3) élastique est disposé dans l'espace intermédiaire axial entre les bras (6.1 ; 6.2) d'étrier de la partie (6) primaire du volant (6 ; 7) moteur à deux masses et relié à celui-ci du côté primaire ;
- l'élément (3) élastique est relié au rotor (2) du côté secondaire par la partie (7) secondaire, s'étendant essentiellement radialement entre les bras (6.1 ; 6.2) d'étrier, du volant (6 ; 7) moteur à deux masses.

7. Dispositif d'entraînement suivant la revendication 5 et/ou 6, ayant la caractéristique suivante :
- un palier (8) rotatif pivotant est prévu entre la partie (6) primaire et la partie (7) secondaire du volant (6 ; 7) moteur à deux masses.

8. Dispositif d'entraînement suivant la revendication 4, ayant les caractéristiques suivantes :
- l'élément (3) élastique est disposé radialement en dessous respectivement des plaques (2.1) de rotor du rotor (2) et des plaques (4.1) de stator du stator (4) de la machine tournante électrique, et se trouve respectivement en entraînement en rotation du côté primaire avec le vilebrequin (1) et du côté secondaire, par l'intermédiaire d'une tôle (9) de recouvrement, avec le rotor (2) ;
- la tôle (9) de recouvrement recouvre l'élément (3) élastique à la manière d'un étrier, par des bras (9.1 ; 9.2) d'étrier radialement distants, s'étendant parallèlement à l'axe (5) ;
- l'élément (3) élastique est disposé dans l'espace intermédiaire radial entre les bras (9.1 ; 9.2) d'étrier de la tôle (9) de recouvrement et relié à ceux-ci du côté secondaire ;
- l'élément (3) élastique est relié au vilebrequin (1) par l'intermédiaire d'un moyeu (10) s'étendant axialement.

9. Dispositif d'entraînement suivant la revendication 8, ayant la caractéristique suivante :
- un palier (8) rotatif pivotant est prévu entre au moins un des bras (9.1 ; 9.2) d'étrier de la tôle (9) de recouvrement d'une part et le moyeu (10) d'autre part.

10. Dispositif d'entraînement suivant au moins l'une des revendications 1 à 9, ayant la caractéristique suivante :
- une machine asynchrone, notamment du type à induit à cage d'écureuil, est prévue comme machine tournante électrique.
